# FASCICULE DE BREVET EUROPEEN

(11) **EP 1 923 636 B1**
(45) Date de publication et mention de la délivrance du brevet: **06.04.2016**
(21) Numéro de dépôt: 07075978.2
(22) Date de dépôt: 13.11.2007
(51) Int. Cl.: F23R 3/14

(54) **Dispositif d'injection d'un mélange d'air et de carburant, chambre de combustion et turbomachine munies d'un tel dispositif**
Vorrichtung zum Einspritzen einer Mischung aus Luft und Treibstoff, Brennkammer und Strömungsmaschine, die mit einer solchen Vorrichtung ausgestattet ist
Device for injecting a mix of air and fuel, combustion chamber and turbomachine equipped with such a device

(30) Priorité: 16.11.2006 FR 0610012
(43) Date de publication de la demande: 21.05.2008
(73) Titulaire: SNECMA, 75015 Paris (FR)
(72) Inventeur: Sandelis, Denis Jean Maurice, 77370 Nangis (FR)
(74) Mandataire: Intès, Didier Gérard André

(56) Documents cités:
- FR-A1- 2 753 779
- US-A- 5 129 231
- US-A- 5 329 761
- US-A- 5 956 955

## Description

L'invention se rapporte au domaine des turbomachines et concerne un dispositif d'injection d'un mélange d'air et de carburant dans une chambre de combustion d'une turbomachine .

Elle concerne plus précisément un nouveau dispositif d'injection permettant d'améliorer le niveau des émissions et la capacité de rallumage de la chambre de combustion, tout en empêchant un éventuel retour de flamme.

Dans la suite de la description, les termes "amont" ou "aval" seront utilisés pour désigner les positions des éléments de structure les uns par rapport aux autres en direction axiale, en prenant pour référence le sens d'écoulement des gaz. De même, les termes "interne" ou "radialement interne" et "externe" ou "radialement externe" seront utilisés pour désigner les positions des éléments de structure les uns par rapport aux autres en direction radiale, en prenant pour référence l'axe de rotation de la turbomachine.

Une turbomachine comprend un ou plusieurs compresseur(s) délivrant de l'air sous pression à une chambre de combustion où l'air est mélangé à du carburant et allumé afin de générer des gaz de combustion chauds. Ces gaz s'écoulent vers l'aval de la chambre vers une ou plusieurs turbine(s) qui transforme(nt) l'énergie ainsi reçue afin d'entraîner en rotation le ou les compresseur(s) et fournir le travail nécessaire, par exemple, à la motorisation d'un avion.

Typiquement, une chambre de combustion utilisée en aéronautique comprend une paroi interne et une paroi externe, reliées entre elles à leur extrémité amont par un fond de chambre. Le fond de chambre présente, espacées circonférentiellement, une pluralité d'ouvertures recevant chacune un dispositif d'injection qui permet l'amenée du mélange d'air et de carburant dans la chambre. Chaque dispositif d'injection comprend notamment un injecteur de carburant, des vrilles radiales, un venturi, un bol et un déflecteur, reliés entre eux, le fond de chambre venant se fixer sur le déflecteur.

La chambre de combustion est alimentée par du carburant liquide, mélangé à de l'air issu d'un compresseur. Le carburant liquide est amené jusqu'à la chambre par les injecteurs dans lesquels il est vaporisé en fines gouttelettes. Cette vaporisation est initiée au niveau de l'injecteur grâce à des gicleurs et est poursuivie au niveau du venturi et du bol par l'effet d'air sous pression provenant d'un compresseur. Cet air sous pression traverse, d'une part, les vrilles radiales du dispositif d'injection pour mettre en rotation le carburant pulvérisé par l'injecteur, et, d'autre part, des orifices ménagés dans différentes parties du dispositif d'injection telles que le bol.

Comme illustré dans le document FR 2 753 779, la pulvérisation est réalisée dans un premier temps par de l'air sous-pression traversant une ou plusieurs vrilles radiales co-rotatives. Elle est ensuite poursuivie en aval par de l'air sous-pression traversant des orifices ménagés sur du bol et venant cisailler la nappe de carburant produite au niveau des vrilles radiales.

Cette architecture de dispositif d'injection n'est malheureusement pas optimale pour tous les moteurs. Notamment, dans certains cas, elle peut être d'une part à l'origine d'émissions gazeuses plus importantes au ralenti et d'autre part dégrader la capacité de rallumage du moteur dans certaines conditions de fonctionnement au sol et en vol.

Un dispositif ayant les caractéristiques du préambule de la revandication 1 est connu du document US 5329 761.

L'objectif de l'invention est de proposer une nouvelle architecture de dispositif d'injection permettant de diminuer les émissions gazeuses au ralenti et d'améliorer les capacités de rallumage du moteur au sol ou en vol, tout en garantissant qu'aucun retour de flamme vers l'amont, par exemple dans les vrilles radiales, n'est possible et tout en conservant inchangées un maximum de parties du dispositif d'injection selon l'art antérieur.

L'invention permet de résoudre ces problèmes en proposant un dispositif d'injection comportant un venturi supplémentaire disposé à l'intérieur du bol, associé à des perçages spécifiques des parois du bol.

Plus particulièrement, l'invention concerne un dispositif d'injection d'un mélange d'air et de carburant dans une chambre de combustion de turbomachine, le dispositif d'injection ayant une symétrie de révolution autour d'un axe Y et comportant, disposés d'amont en aval dans le sens d'écoulement des gaz, une traversée coulissante, reliée par une coupelle annulaire à une ou plusieurs vrilles radiales ou axiales, les vrilles étant munies d'un premier venturi et injectant à l'intérieur du dispositif d'injection de l'air sous pression à une vitesse axiale V1 tout en lui imposant une rotation autour de l'axe Y, un bol espacé axialement des vrilles radiales, le bol comportant une extrémité amont, une paroi cylindrique prolongée par une paroi évasée et une extrémité aval. Ce dispositif d'injection est remarquable en ce qu'il comporte un second venturi disposé à l'intérieur du bol coaxialement à l'axe Y, le second venturi comprenant une extrémité amont, une partie cylindrique se prolongeant en une partie divergente et une extrémité aval, la partie cylindrique du second venturi étant concentrique à la paroi cylindrique du bol, l'extrémité amont du second venturi étant disposée axialement au même niveau que l'extrémité amont du bol, et en ce que la paroi évasée du bol est munie de deux rangées d'orifices répartis circonférentiellement de façon régulière et dont les axes appartiennent à un plan orthogonal à la paroi évasée du bol et présentent une inclinaison tangentielle dans le sens opposé au sens de rotation de l'air injecté par les vrilles, ces rangées d'orifices injectant de l'air sous pression à une vitesse axiale V2, l'air sous pression injecté étant contrarotatif à l'air injecté par les vrilles.

La longueur totale du second venturi et celle du bol sont de préférence telles que la longueur totale du second venturi représente entre 80 et 100 % de celle du bol.

Préférentiellement, le plus grand diamètre de la partie cylindrique du second venturi représente entre 70 et 80 % du plus grand diamètre de la paroi évasée du bol.

Avantageusement, la première rangée d'orifices de la paroi évasée du bol injecte une quantité d'air sous pression correspondant à 10 à 20 % de l'air sous pression injecté par les deux rangées d'orifices et la seconde rangée d'orifices de la paroi évasée du bol injecte une quantité d'air sous pression correspondant à 80 à 90 % de l'air sous pression injecté par les deux rangées d'orifices.

Enfin, le rapport V2/V1 est avantageusement compris entre 2 et 3.

Par ailleurs, l'invention concerné aussi une chambre de combustion comprenant une paroi interne, une paroi externe, un fond de chambre et munie d'au moins un tel dispositif d'injection.

L'invention concerne enfin une turbomachine munie d'une telle chambre de combustion.

L'invention sera mieux comprise et d'autres avantages de celle-ci apparaîtront plus clairement à la lumière de la description d'un mode préféré de réalisation, donnée à titre d'exemple non limitatif et faite en référence aux dessins annexés, dans lesquels :
- la figure 1 est une vue schématique en coupe d'une turbomachine et plus précisément d'un turboréacteur d'avion ;
- la figure 2 est une vue schématique en coupe de la partie amont d'une chambre de combustion munie d'un dispositif d'injection selon l'art antérieur ;
- la figure 3 est une vue schématique détaillée, en coupe, d'un dispositif d'injection selon l'art antérieur ;
- la figure 4 est une vue schématique en coupe d'un dispositif d'injection selon l'invention ;
- la figure 5 est une vue schématique en coupe d'un dispositif d'injection selon une variante de l'invention.

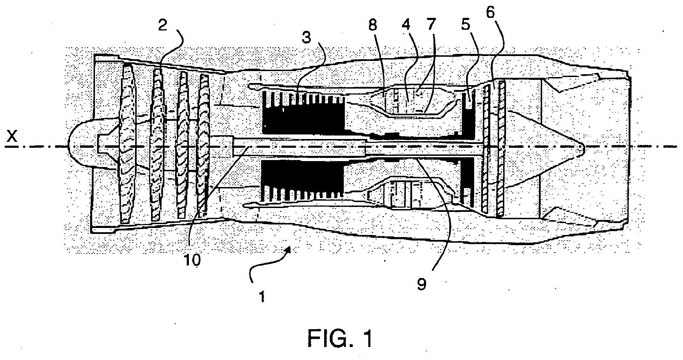

La figure 1 montre en coupe une vue d'ensemble d'une turbomachine 1, par exemple un turboréacteur d'avion, comprenant un compresseur basse pression 2, un compresseur haute pression 3, une chambre de combustion 4, une turbine basse pression 5 et une turbine haute pression 6. La chambre de combustion 4 peut être du type annulaire et est délimitée par deux parois annulaires 7 espacées radialement par rapport à l'axe X de rotation du turboréacteur, et reliées à leur extrémité amont à un fond de chambre annulaire 8. Le fond de chambre 8 comporte une pluralité d'ouvertures (non représentées), régulièrement espacées circonférentiellement. Dans chacune de ces ouvertures est monté un dispositif d'injection. Les gaz de combustion s'écoulent vers l'aval dans la chambre de combustion 4 et alimentent ensuite les turbines 5 et 6 qui entraînent respectivement les compresseurs 2 et 3 disposés en amont du fond de chambre 8, par l'intermédiaire respectivement de deux arbres 9 et 10. Le compresseur haute pression 3 alimente en air les dispositifs d'injection, ainsi que deux espaces annulaires disposés radialement respectivement à l'intérieur et à l'extérieur de la chambre de combustion 4. L'air introduit dans la chambre de combustion 4 participe à la pulvérisation du carburant et à sa combustion. L'air circulant à l'extérieur des parois de la chambre de combustion 2 participe au refroidissement de ces parois et pénètre dans la chambre par des trous de dilution (non représentés) afin de refroidir les gaz de combustion transmis à la turbine.

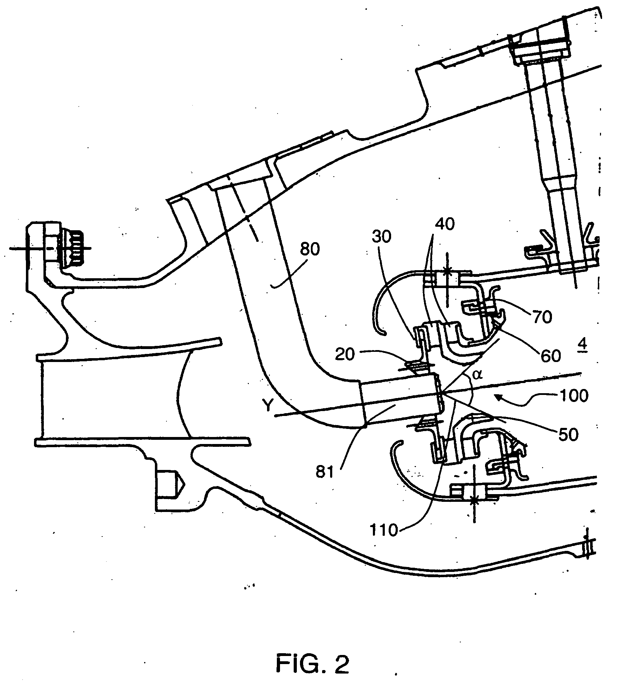

La figure 2 montre en coupe un exemple de réalisation d'un dispositif d'injection 100 selon l'art antérieur. Le dispositif d'injection 100, dont l'axe de symétrie de révolution est repéré Y, comporte, disposés de l'amont vers l'aval, un injecteur 80 disposé au centre d'une traversée coulissante 20, liée par une coupelle annulaire 30 à des vrilles radiales 40. Les vrilles radiales 40 comportent un venturi 50 et sont reliées par leur extrémité aval à un bol 60 à paroi conique divergente. Le bol 60 est lui-même relié au fond de chambre 8 par l'intermédiaire d'un déflecteur 70.

La chambre de combustion 4 est alimentée par du carburant liquide, mélangé à de l'air issu d'un compresseur. Le carburant liquide est amené jusqu'à la chambre par les injecteurs 80. L'extrémité aval 81, encore appelée tête, des injecteurs 80 est positionnée au sein du dispositif d'injection 100, au centre de la traversée coulissante 20, de façon à ce que l'axe de symétrie de la tête 81 des injecteurs corresponde à l'axe de symétrie de la traversée coulissante. Chaque tête 81 d'injecteur comporte un gicleur (non représenté) qui assure la carburation du mélange air-carburant, ce mélange sortant des injecteurs sous la forme d'un cône 110 d'angle au sommet α.

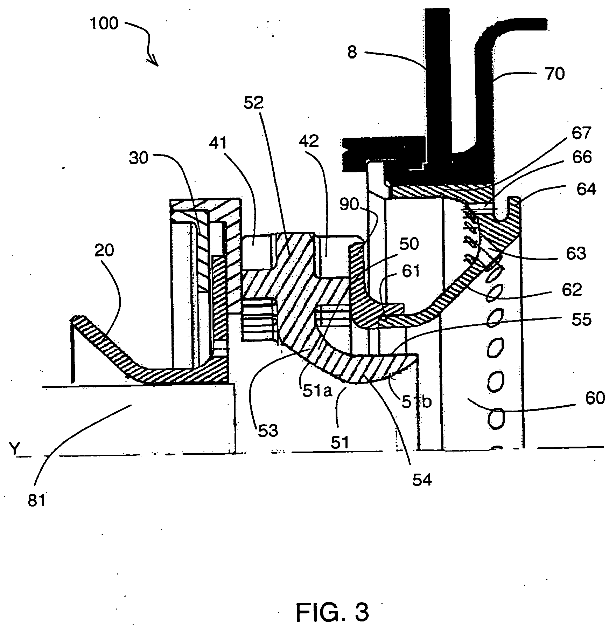

La figure 3 montre une vue schématique détaillée, en coupe, d'un dispositif d'injection selon l'art antérieur.

Le venturi 50, disposé entre deux vrilles radiales 41 et 42, présente une paroi intérieure 51 ayant un profil évolutif composé d'une partie convergente 51 a et d'une partie divergente 51 b, reliée entre elles par une zone de transition, le venturi présentant un diamètre minimum au niveau de la zone de transition. Il est composé d'une partie annulaire 52 s'étendant radialement, reliée par sont extrémité radialement interne à une partie conique convergente 53 qui se prolonge en aval en une partie divergente 54. La partie annulaire 52 relie le venturi 50 en amont à la vrille radiale 41 et en aval à la vrille radiale 42. La partie divergente 54 comporte une surface extérieure 55 et une surface intérieure. La surface extérieure 55 est un cylindre d'axe Y, tandis que la surface intérieure s'évase et constitue la partie divergente 51b de la paroi intérieure 51 du venturi.

Dans l'exemple illustré ici, la seconde vrille radiale 42 est reliée, en aval, au bol 60 par l'intermédiaire d'une pièce de liaison 90. Cette liaison peut tout aussi bien être réalisée directement entre la vrille radiale 42 et le bol 60, sans aucune pièce intermédiaire. Le bol 60 comporte une paroi cylindrique 61 se prolongeant en une paroi évasée vers l'aval 62. La paroi cylindrique 61 du bol est disposée coaxialement à l'axe Y et entoure la partie divergente 54 du venturi 50, canalisant ainsi l'air sous pression injecté au niveau de la seconde vrille radiale 42. La paroi évasée 62 du bol comporte une pluralité de trous 63 d'introduction d'air, alimentés par de l'air provenant du compresseur haute pression 3. Elle est de plus munie, à son extrémité aval, d'une collerette annulaire 64 s'étendant radialement vers l'extérieur. Le bol 60 comporte aussi une paroi cylindrique de support 65, coaxiale à l'axe Y, reliant le bol au déflecteur 70. La paroi cylindrique de support 65 est liée à l'extrémité aval de la paroi évasée 62 juste en amont de la collerette annulaire 64 et est disposée à radialement vers l'extérieur du bol. Des trous de refroidissement 66 sont réalisés au niveau du raccordement entre la paroi cylindrique de support 65 et la paroi évasée 62. Ces trous de refroidissement 66 ont pour rôle d'apporter de l'air issu du compresseur haute pression 3 afin de refroidir la collerette annulaire 64.

Le déflecteur 70 est quant à lui disposé dans la chambre de combustion parallèlement au fond de chambre 8.

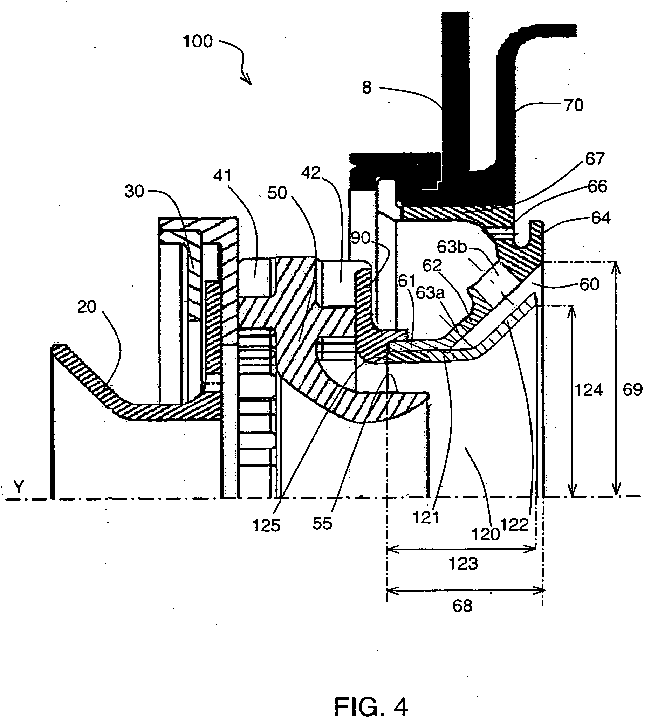

La figure 4 montre une vue schématique détaillée, en coupe, d'un dispositif d'injection 100 selon l'invention.

Ce dispositif d'injection 100, d'axe Y, comporte, disposé de l'amont vers l'aval, une traversée coulissante 20 liée à une ou plusieurs vrilles radiales 41, 42 corotatives, par l'intermédiaire d'une coupelle annulaire 30. Les vrilles radiales comportent un premier venturi 50 et sont liées, en aval, à un bol 60 grâce à une pièce de liaison 90. Cette pièce de liaison n'est pas indispensable et pourrait par exemple être monobloc avec le bol ou les vrilles radiales. Le bol est lui-même fixé au centre d'un déflecteur 70 qui se positionne sur un fond de chambre 8, parallèlement à celui-ci.

Le dispositif d'injection 100 comporte un second venturi 120 disposé à l'intérieur du bol 60, coaxialement à l'axe Y. Le second venturi 120, dont la longueur totale est repérée 123, comporte une partie cylindrique 121, concentrique à la paroi cylindrique 61 du bol, et qui se prolonge en aval en une partie divergente 122 dont le plus grand diamètre est repéré 124. Selon l'invention, l'extrémité amont 125 du second venturi 120 est disposée axialement au même niveau que l'extrémité amont du bol. La partie cylindrique 121 du second venturi, qui peut être brasée à la paroi cylindrique 61 du bol est dimensionnée de telle façon qu'il n'y ait aucun accident de forme au niveau du raccordement entre la pièce de liaison 90 afin de ne pas perturber l'écoulement d'air sous-pression issu de la seconde vrille radiale 42.

Préférentiellement, les dimensions du second venturi 120 sont telles que sa longueur totale 123 représente 80 à 100 % de la longueur totale du bol, repérée 68, la longueur de la partie cylindrique 121 du second venturi demeurant supérieure à la longueur de la paroi cylindrique 61 du bol. Par ailleurs, le plus grand rayon 124 du second venturi 120 représente avantageusement entre 70 et 80 % du plus grand rayon du bol, repéré 69.

Selon l'invention, des aménagements supplémentaires sont réalisés sur la paroi évasée 62 du bol 60. Cette paroi évasée est en effet munie de deux rangées d'orifices 63a et 63b répartis circonférentiellement de façon régulière. La première rangée d'orifices 63a, encore appelés orifices de purge, est réalisée à proximité du raccordement entre la paroi cylindrique 61 et la paroi évasée 62 du bol. La seconde rangée d'orifices 63b est réalisée en aval de la première rangée d'orifices 63a sans dépasser axialement du second venturi 120. Les axes des orifices de chacune de ces deux rangées sont orthogonaux à la paroi évasée 62 du bol et présentent une inclinaison tangentielle dans le sens contraire de l'inclinaison tangentielle des vrilles radiales 41 et 42. Ainsi l'air sous pression injecté au niveau des rangées d'orifices 63a et 63b est mis en rotation autour de l'axe Y de façon contrarotative par rapport à l'air sous pression injecté au niveau des vrilles radiales 41 et 42. Les diamètres des orifices sont dimensionnés de telle façon que l'air injecté au niveau de la première rangée d'orifices 63a représente 10 à 20 % de la perméabilité du bol et que l'air injecté au niveau de la seconde rangée d'orifices 63b en représente 80 à 90 %. On entend par perméabilité du bol le débit d'air qui y est injecté de façon à créer le mélange d'air et de carburant voulu.

L'air injecté au niveau de la première rangée d'orifices 63a permet de faciliter la mise en giration tangentielle de l'air au niveau de la seconde rangée d'orifices 63B. Il permet de plus d'empêcher toute remontée éventuelle de carburant, et donc tout retour de flamme, au niveau de la paroi évasée 61 du bol. Grâce à l'impact de cet air sur le second venturi 120, ce dernier est refroidi, la température de ses parois est homogénéisée et le risque de cokéfaction est ainsi diminué voire devient nul.

Grâce à l'invention, le pré-mélange air-carburant provenant du mélange réalisé au niveau des vrilles radiales 41, 42 sort du second venturi 120 avec une vitesse axiale V1 et est cisaillé par l'air issu du bol à une vitesse axiale V2 et dont la giration est contrarotative à celle du pré-mélange issu des vrilles radiales. L'invention permet d'atteindre des rapports V2/V1 de l'ordre de 2 à 3 et crée, immédiatement en aval du bol 60, une zone de recirculation où se forme un vortex. En sortie de bol, le mélange air-carburant a une qualité de pulvérisation améliorée ainsi qu'une vitesse axiale augmentée. Par ailleurs, le vortex ainsi formé permet d'éviter tout retour de flamme à l'intérieur du dispositif d'injection et donc de dégrader thermiquement ce dernier. Le vortex permet de plus d'améliorer la stabilité et la capacité de rallumage de la chambre en favorisant la propagation et la répartition de la flamme. Il permet aussi d'augmenter le temps de séjour du mélange air-carburant dans la chambre et ainsi d'améliorer le rendement au ralenti et de diminuer les émissions gazeuses. Un autre avantage de l'invention est qu'elle permet de conserver une grande partie des pièces composant le dispositif d'injection. En effet, en comparant par exemple les figures 3 et 4, on voit que seul le bol 60 a été modifié, ce qui permet de garantir une interchangeabilité avec les dispositifs d'injection existants.

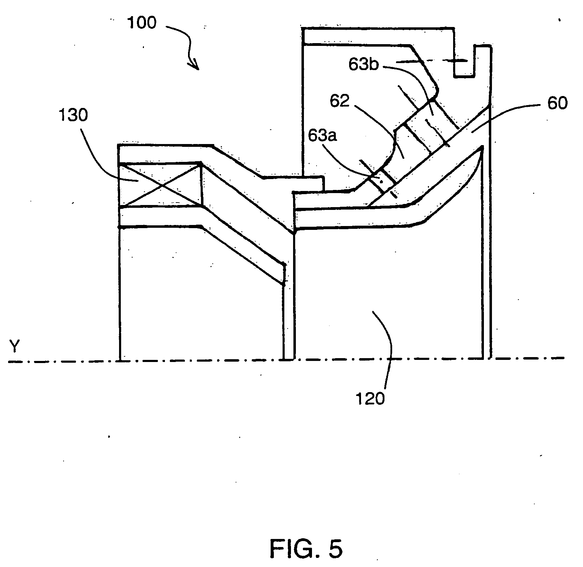

Dans l'exemple de réalisation illustré à la figure 4, le bol 60 est muni de deux rangées d'orifices circulaires 63a et 63b et la seconde rangées d'orifices 63b est réalisée à travers un bossage ménagé radialement à l'extérieur du bol 60. La description et les avantages liés à l'invention et mentionnés plus haut restent valables quelle que soit la géométrie des orifices (trous circulaires, oblongs, fentes, etc.). De même, la seconde rangée d'orifices 63b peut être indifféremment réalisée à travers un bossage ou directement à travers la paroi évasée 62 du bol, sans aucune surépaisseur. Enfin, comme illustré à la figure 5, la technologie objet de l'invention peut être appliquée de façon similaire à un dispositif d'injection alimenté, non pas par une ou plusieurs vrilles radiales, mais par une ou plusieurs vrilles axiales. Dans l'exemple de la figure 5, le dispositif d'injection 100, représenté partiellement, comporte notamment une vrille axiale 130, qui joue le même rôle que la seconde vrille radiale 42 de la figure 4, et qui est reliée en aval à un ensemble selon l'invention formé par un bol 60 relié à un second venturi 120, le bol étant muni sur sa paroi évasée 62 de deux rangées d'orifices 63a et 63b conformes à l'invention.

## Revendications

1. Dispositif d'injection d'un mélange d'air et de carburant dans une chambre de combustion de turbomachine, le dispositif d'injection ayant une symétrie de révolution autour d'un axe Y et comportant, disposés d'amont en aval dans le sens d'écoulement des gaz, une traversée coulissante (20), reliée par une coupelle annulaire (30) à une ou plusieurs vrilles radiales ou axiales (41, 42), les vrilles étant munies d'un premier venturi (50) et injectant à l'intérieur du dispositif d'injection de l'air sous pression à une vitesse axiale V1 tout en lui imposant une rotation autour de l'axe Y, un bol (60) espacé axialement des vrilles radiales (41,. 42), le bol (60) comportant une extrémité amont, une paroi cylindrique (61) prolongée par une paroi évasée (62) et une extrémité aval, le dispositif d'injection comportant un second venturi (120) disposé à l'intérieur du bol (60) coaxialement à l'axe Y, le second venturi (120) comprenant une extrémité amont, une partie cylindrique (121) se prolongeant en une partie divergente (122) et une extrémité aval, la partie cylindrique (121) du second venturi (120) étant concentrique à la paroi cylindrique (61) du bol (60) **caractérisé en ce que**, l'extrémité amont du second venturi (120) est disposée axialement au même niveau que l'extrémité amont du bol (60), et **en ce que** la paroi évasée (62) du bol (60) est munie de deux rangées d'orifices (63a, 63b) répartis circonférentiellement de façon régulière et dont les axes appartiennent à un plan orthogonal à la paroi évasée (62) du bol et présentent une inclinaison tangentielle dans le sens opposé au sens de rotation de l'air injecté par les vrilles, ces rangées d'orifices (63a, 63b) injectant de l'air sous pression à une vitesse axiale V2, l'air sous pression injecté étant contrarotatif à l'air injecté par les vrilles.

2. Dispositif d'injection selon la revendication 1,
**caractérisé en ce que** le second venturi (120) et le bot (60) ont des longueurs totales (123, 68) telles que la longueur totale (123) du second venturi représente entre 80 et 100 % de la longueur totale du bol.

3. Dispositif d'injection selon l'une quelconque des revendications 1 ou 2,
**caractérisé en ce que** la partie divergente (122) du second venturi (120) et la paroi évasée (62) du bol (60) ont chacun un plus grand diamètre (124, 69) tels que le plus grand diamètre (124) du second venturi représente entre 70 et 80 % du plus grand diamètre (69) du bol.

4. Dispositif d'injection selon l'une quelconque des revendications 1 à 3,
**caractérisé en ce que** la première rangée d'orifices (63a) de la paroi évasée du bol (60) injecte une quantité d'air sous pression correspondant à 10 à 20 % de l'air sous pression injecté par les deux rangées d'orifices (63a, 63b)
et **en ce que** la seconde rangée d'orifices (63b) de la paroi évasée du bol (60) injecte une quantité d'air sous pression correspondant à 80 à 90 % de l'air sous pression injecté par les deux rangées d'orifices (63a, 63b).

5. Dispositif d'injection selon l'une quelconque des revendications 1 à 4,
**caractérisé en ce que** le rapport V2/V1 est compris entre 2 et 3.

6. Chambre de combustion comprenant une paroi interne, une paroi externe (7), un fond de chambre (8) **caractérisée en ce qu'**elle est munie d'au moins un dispositif d'injection selon l'une quelconque des revendications précédentes.

7. Turbomachine munie d'une chambre de combustion selon la revendication 6.

## Patentansprüche

1. Vorrichtung zum Einspritzen einer Mischung aus Luft und Treibstoff in eine Brennkammer einer Turbomaschine, wobei die Einspritzvorrichtung eine Umdrehungssymmetrie um eine Achse Y hat und, von stromaufwärts nach stromabwärts in Fließrichtung der Gase angeordnet, eine gleitende Durchführung (20) umfasst, die durch eine ringförmige Kuppel (30) mit einer oder mehreren radialen oder axialen Förderschnecken (41, 42) verbunden ist, wobei die Förderschnecken mit einem ersten Venturi-Ventil (50) versehen sind und in das Innere der Einspritzvorrichtung Druckluft mit einer Axialgeschwindigkeit V1 einspritzen, wobei ihr eine Drehung um die Achse Y auferlegt wird, einen Behälter (60), der axial zu den radialen Förderschnecken (41, 42) beabstandet ist, wobei der Behälter (60) ein stromaufwärtiges Ende, eine zylindrische Wand (61), die durch eine erweiterte Wand (62) verlängert ist, und ein stromabwärtiges Ende umfasst,
wobei die Einspritzvorrichtung ein zweites Venturi-Ventil (120) umfasst, das im Inneren des Behälters (60) koaxial zur Achse Y angeordnet ist, wobei das zweite Venturi-Ventil (120) ein stromaufwärtiges Ende, einen zylindrischen Teil (121), der sich in einem divergierenden Teil (122) verlängert, und ein stromabwärtiges Ende umfasst, wobei der zylindrische Teil (121) des zweiten Venturi-Ventils (120) zur zylindrischen Wand (61) des Behälters (60) konzentrisch ist, **dadurch gekennzeichnet, dass** das stromaufwärtige Ende des zweiten Venturi-Ventils (120) axial auf demselben Niveau wie das stromaufwärtige Ende des Behälters (60) angeordnet ist,
und dass die erweiterte Wand (62) des Behälters (60) mit zwei Reihen von Öffnungen (63a, 63b) versehen ist, die in Umfangsrichtung regelmäßig verteilt sind, und deren Achsen einer Ebene orthogonal zu der erweiterten Wand (62) des Behälters angehören und eine Tangentialneigung in die zur Drehrichtung der durch die Förderschnecken eingespritzten Luft entgegengesetzte Richtung aufweisen, wobei diese Reihen von Öffnungen (63a, 63b) Druckluft mit einer Axialgeschwindigkeit V2 einspritzen, wobei die eingespritzte Druckluft zu der durch die Förderschnecken eingespritzten Luft gegenläufig ist.

2. Einspritzvorrichtung nach Anspruch 1,
**dadurch gekennzeichnet, dass** das zweite Venturi-Ventil (120) und der Behälter (60) derartige Gesamtlängen (123, 68) aufweisen, dass die Gesamtlänge (123) des zweiten Venturi-Ventils zwischen 80 und 100 % der Gesamtlänge des Behälters beträgt.

3. Einspritzvorrichtung nach einem der Ansprüche 1 oder 2,
**dadurch gekennzeichnet, dass** der divergierende Teil (122) des zweiten Venturi-Ventils (120) und die erweiterte Wand (62) des Behälters (60) jeweils einen größeren Durchmesser (124, 69) aufweisen, so dass der größere Durchmesser (124) des zweiten Venturi-Ventils zwischen 70 und 80 % des größeren Durchmessers (69) des Behälters beträgt.

4. Einspritzvorrichtung nach einem der Ansprüche 1 bis 3,
**dadurch gekennzeichnet, dass** die erste Reihe von Öffnungen (63a) der erweiterten Wand des Behälters (60) eine Druckluftmenge entsprechend 10 bis 20 % der von den zwei Öffnungsreihen (63a, 63b) eingespritzten Druckluft einspritzt, und dass die zweite Reihe von Öffnungen (63b) der erweiterten Wand des Behälters (60) eine Druckluftmenge entsprechend 80 bis 90 % der von den zwei Öffnungsreihen (63a, 63b) eingespritzten Druckluft einspritzt.

5. Einspritzvorrichtung nach einem der Ansprüche 1 bis 4,
**dadurch gekennzeichnet, dass** das Verhältnis V2/V1 zwischen 2 und 3 beträgt.

6. Brennkammer, umfassend eine Innenwand, eine Außenwand (7), einen Kammerboden (8), **dadurch gekennzeichnet, dass** sie mit mindestens einer Einspritzvorrichtung nach einem der vorhergehenden Ansprüche versehen ist.

7. Turbomaschine, die mit einer Brennkammer nach Anspruch 6 versehen ist.

## Claims

1. A device for injecting a mixture of air and fuel into a combustion chamber of a turbomachine, the injection device having a symmetry of revolution about an axis Y and including, arranged from upstream to downstream in the gas flow direction, a sliding bushing (20) connected by an annular cup (30) to one or more radial or axial swirlers (41,42), the swirlers being provided with a first venturi (50) and injecting pressurized air inside the injection device at an axial velocity V1 while at the same time causing it to rotate about the axis Y, a bowl (60) spaced axially from the radial swirlers (41,42), the bowl (60) including an upstream end, a cylindrical wall extended by a flared wall (62), and a downstream end, the injection device including a second venturi (120) arranged inside the bowl (60) coaxially to the axis Y, the second venturi (120) comprising an upstream end, a cylindrical part (121) extended by a divergent part (122) and a downstream end, the cylindrical part (121) of the second venturi (120) being concentric with the cylindrical wall (61) of the bowl (60), **characterized in that** the upstream end of the second venturi (120) is arranged axially at the same level as the upstream end of the bowl (60), and **in that** the flared wall (62) of the bowl (60) is provided with two rows of orifices (63a, 63b) which are distributed circumferentially in a regular fashion and whose axes belong to a plane orthogonal to the flared wall (62) of the bowl and have a tangential inclination in the opposite direction to the direction of rotation of the air injected by the swirlers, these rows of orifices (63a, 63b) injecting pressurized air at an axial velocity V2, the injected pressurized air being contrarotating with respect to the air injected by the swirlers.

2. The injection device according to claim 1, **characterized in that** the second venturi (120) and the bowl (60) have total lengths (123, 68) such that the total length (123) of the second venturi represents between 80 and 100% of the total length of the bowl.

3. The injection device according to any one of claims 1 or 2, **characterized in that** the divergent part (122) of the second venturi (120) and the flared part (62) of the bowl (60) each have a largest diameter (124, 69) such that the largest diameter (124) of the second venturi represents between 70 and 80% of the largest diameter of the bowl (69).

4. The injection device according to any one of claims 1 to 3, **characterized in that** the first row of orifices (63a) in the flared wall of the bowl (60) injects a quantity of pressurized air corresponding to 10 to 20% of the pressurized air injected by the two rows of orifices (63a, 63b), and **in that** the second row of orifices (63b) in the flared wall of the bowl (60) injects a quantity of pressurized air corresponding to 80 to 90% of the pressurized air injected by the two rows of orifices (63a, 63b).

5. The injection device according to any one of claims 1 to 4, **characterized in that** the ratio V2/V1 is between 2 and 3.

6. A combustion chamber comprising an internal wall, an external wall (7) and a chamber endwall (8), **characterized in that** it is provided with at least one injection device according to any one of the preceding claims.

7. A turbomachine provided with a combustion chamber according to claim 6.
